# EUROPEAN PATENT APPLICATION

(11) **EP 4 456 248 A1**
(43) Date of publication of application: **30.10.2024**
(21) Application number: 22948610.5
(22) Date of filing: 30.06.2022
(51) Int. Cl.: H01M 10/42

(54) **BATTERY AND ELECTRIC DEVICE**

(71) Applicant: Contemporary Amperex Technology (Hong Kong) Limited, Central, Central And Western District (HK)
(72) Inventor: LI, Lingyu, Ningde, Fujian 352100 (CN)
(74) Representative: Holt, Lucy Rose
(86) International application number: PCT/CN2022/103109
(87) International publication number: WO 2024/000508

(57) **Abstract**

The present application relates to the field of batteries, and provides a battery and an electric device. The battery comprises a battery cell group, a first supporting member, and a second supporting member. The battery cell group comprises a plurality of battery cells arranged in a first direction. Each battery cell comprises two first surfaces arranged opposite to each other in the first direction, and four second surfaces arranged around the first surfaces, and each battery cell is provided with a flange part protruding out of each second surface. The first supporting member and the second supporting member are used for supporting the battery cell group. The battery cell group, the first supporting member, and the second supporting member are sequentially arranged in a second direction. The second direction is perpendicular to the first direction. The side of the first supporting member facing the battery cell group is provided with first recessed parts used for relieving the flange part, and a first cavity is formed in the second supporting member. The first supporting member of the battery is provided with the first recessed parts for relieving the flange part, and when the battery cells are supported by the first supporting member, the flange part does not need to be stressed, so that the risk that the flange part is damaged caused by stress is reduced, and the service life of the battery is long.

## Description

### TECHNICAL FIELD

The present application relates to the field of batteries, and particularly, to a battery and an electrical device.

### BACKGROUND

Batteries have found broad applications in the field of new energy, such as electric vehicles and new energy vehicles. New energy vehicles and electric vehicles have become a new development trend in the vehicle industry. Many design factors, such as energy density, discharge capacity, charge-discharge rate and other performance parameters, should be considered in the development of the battery technology. Additionally, lifespan of a battery also needs to be considered. However, current battery lifespan is short.

### SUMMARY OF THE INVENTION

An objective of embodiments of the present application is to provide a battery and an electrical device, which is intended to improve the problem of short battery lifespan in the related art.

In a first aspect, an embodiment of the present application provides a battery. The battery includes a battery cell group, a first support member, and a second support member. The battery cell group includes a plurality of battery cells arranged along a first direction. Each of the battery cells includes two first surfaces disposed oppositely along the first direction and four second surfaces disposed around the first surfaces, and each of the battery cells has a flange portion protruding from the second surface; the first support member and the second support member are used to support the battery cell group, the battery cell group, the first support member and the third support member are disposed sequentially along a second direction, and the second direction is perpendicular to the first direction; where a side of the first support member facing the battery cell group is provided with a first recess for avoiding the flange portion, and a first cavity is formed inside the second support member.

In the above technical solution, the first support member of the battery is provided with the first recess that avoids the flange portion. In this way, the first support member will avoid the flange portion when supporting the battery cells, so that the flange portion does not need to bear force, reducing the risk of damage to the flange portion due to force bearing. The first cavity is formed inside the second support member. When the battery experiences a collision, the first cavity can provide buffering and absorb energy, reducing the effect of an external impact on the battery cells, improving anti-collision capability of the battery, and reducing the possibility of damage to the flange portion due to the external impact so that the battery has a longer lifespan.

As an optional technical solution of the embodiment of the present application, the side of the first support member facing the battery cell group is provided with a plurality of protrusions, each of the protrusions correspondingly supports one of the battery cells, and the first recess is formed between adjacent two of the protrusions.

In the above technical solution, one first support member is provided with a plurality of protrusions thereon to correspondingly support a plurality of battery cells. The plurality of protrusions connected together have good strength and can play a good role of supporting the battery cell group. The first recess is formed between adjacent two of the protrusions to avoid the flange portion of the battery cell supported by the protrusions, so that the flange portion of the battery cell supported by the protrusions does not need to bear force, thereby reducing the risk of damage to the flange portion due to force bearing such that the battery has a longer lifespan.

As an optional technical solution of the embodiment of the present application, a heat conducting layer is disposed between the protrusion and the battery cell.

In the above technical solution, with the heat conducting layer disposed between the protrusion and the battery cell, heat conducting efficiency is improved, and heat exchange between the battery cell and the first support member and second support member to adjust the temperature of the battery cell is facilitated, so that the battery cell works at the suitable temperature, improving performance of the battery. In addition, as the protrusion is a portion on the first support member that is relatively close to the battery cell, the way of disposing the heat conducting layer between the protrusion and the battery cell can reduce consumption of material for disposing the heat conducting layer.

As an optional technical solution of the embodiment of the present application, along the second direction, the length of the flange portion protruding from the second surface is A, the depth of the first recess is B, the thickness of the heat conducting layer is C, and they satisfy: B + C - A > 1.5 mm.

In the above technical solution, a sum of the depth of the first recess and the thickness of the heat conducting layer is a distance between a bottom face of the first recess and the second surface in the second direction, that is, B + C is the distance between the bottom face of the first recess and the second surface in the second direction. Since A is the length of the flange portion protruding from the second surface, B + C - A represents a distance in the second direction between a surface of the flange portion facing the bottom face of the first recess and the bottom face of the first recess. The distance in the second direction between the surface of the flange portion facing the bottom face of the first recess and the bottom face of the first recess is greater than or equal to 1.5 mm. Even if the heat conducting layer has a certain deformation and becomes thinner during use of the battery, the flange portion is not prone to damage due to a contact with the bottom face of the first recess, or when an impact occurs, there can be a certain margin for the flange portion to move closer to the bottom face of the first recess, reducing the possibility of damage due to a collision between the flange portion and the bottom face of the first recess, and extending lifespan of the battery.

As an optional technical solution of the embodiment of the present application, 0.5 mm ≤ C ≤ 2.5 mm.

In the above technical solution, since the thickness of the heat conducting layer is greater than or equal to 0.5 mm, and less than or equal to 2.5 mm, a good heat conducting result can be achieved. When C < 0.5 mm, production is difficult and production cost is high. However, when C > 2.5 mm, the heat conducting result is poor.

As an optional technical solution of the embodiment of the present application, a second recess is formed at a position, corresponding to the protrusion, on the side of the first support member facing away from the battery cell group, and the second support member covers the second recess to form a second cavity.

In the above technical solution, by forming the second recess on the side of the first support member facing away from the battery cell group and enabling the position of the second recess to correspond to the protrusion, on the one hand, it is possible that use of materials of the first support member is reduced and production cost is reduced, while strength of the position where the protrusion is located is guaranteed; on the other hand, the second cavity formed by the second support member covering the second recess can provide buffering and absorb energy, reducing the effect of external impact on the battery cell, improving the anti-collision capability of the battery, and reducing the possibility of damage to the flange portion due to the external impact such that the battery has a longer lifespan.

As an optional technical solution of the embodiment of the present application, a first heat exchange medium is provided in the second cavity to adjust the temperature of the battery cell.

In the above technical solution, with the first heat exchange medium provided in the second cavity so as to exchange heat with the battery cell, and to absorb heat of the battery cell or supply heat to the battery cell to adjust the temperature of the battery cell, the battery cell is allowed to work at the suitable temperature, improving performance of the battery.

As an optional technical solution of the embodiment of the present application, along the first direction, a minimum distance between the flange portion and the protrusion is L1, which satisfies: L1 ≥ 0.5 mm.

In the above technical solution, by enabling the minimum distance between the flange portion and the protrusion to be greater than or equal to 0.5 mm, when an impact occurs, there can be a certain margin for the flange portion to move closer to the protrusion, reducing the possibility of damage due to a collision between the flange portion and the protrusion, and extending the lifespan of the battery. Additionally, assembly is facilitated with L1 ≥ 0.5 mm.

As an optional technical solution of the embodiment of the present application, thickness of the first support member at the position of the first recess is L2, which satisfies: 0.6 mm ≤ L2 ≤ 1.8 mm.

In the above technical solution, by enabling the thickness of the first support member at the position of the first recess to be in the range of 0.6-1.8 mm, it is possible to ensure that the battery has a high energy density, while the first support member has enough strength. When L2 < 0.6 mm, the strength of the first support member is not enough, and the support effect for the battery cell group is poor. When L2 > 1.8 mm, the thickness of the first support member is too large, which occupies a large amount of space of the battery, so that the energy density of the battery is low.

As an optional technical solution of the embodiment of the present application, the second support member includes a first support body and a second support body, the first support member, the first support body, and the second support body are disposed sequentially along the second direction, and the first support body and the second support body jointly define the first cavity.

In the above technical solution, with the first support body and the second support body jointly defining the first cavity, and the first cavity being independent of the first support member (the first cavity is unrelated to the arrangement form of the first support member), the position and form of the first cavity may be freely designed as needed to achieve a good buffering and energy-absorbing result.

As an optional technical solution of the embodiment of the present application, a third recess is formed on a side of the second support body facing the first support body, and the first support body covers the third recess to form the first cavity.

In the above technical solution, with the third recess formed on the side of the second support body facing the first support body and with the first cavity being formed by the first support body covering the third recess, manufacturing is simple and convenient.

As an optional technical solution of the embodiment of the present application, the depth of the third recess is H, which satisfies: 2.5 mm ≤ H ≤ 4.5 mm.

In the above technical solution, with the depth of the third recess defined between 2.5 and 4.5 mm to ensure that the third recess has enough depth, there is a good buffering and energy-absorbing result. Further, since the depth of the third recess can affect the thickness of the second support body and thus the energy density of the battery cell, the depth of the third recess cannot be too large. When H < 2.5 mm, the depth of the third recess is shallow, and the buffering and energy-absorbing result is poor. When H > 4.5 mm, the depth of the third recess is too large, which enables the thickness of the second support body to be larger, leading to large occupation of space of the battery, and resulting in a low energy density of the battery.

As an optional technical solution of the embodiment of the present application, the thickness of the second support body at the position of the third recess is L3, which satisfies: 0.4 mm ≤ L3 ≤ 1.6 mm.

In the above technical solution, by enabling the thickness of the second support body at the position of the third recess to be in the range of 0.4-1.6 mm, it is possible to ensure that the battery has a high energy density, while the second support body has enough strength. When L3 < 0.4 mm, the strength of the second support body is not enough, and the support effect for the battery cell group, the first support member and the first support body is poor. When L3 > 1.6 mm, the thickness of the second support body is too large, which occupies a large amount of space of the battery, so that the energy density of the battery is low.

As an optional technical solution of the embodiment of the present application, the thickness of the first support body is L4, which satisfies: 0.2 mm ≤ L4 ≤ 1.4 mm.

In the above technical solution, by enabling the thickness of the first support body to be in the range of 0.2-1.4 mm, it is possible to ensure that the battery has a high energy density, while the first support body has enough strength. When L4 < 0.4 mm, the strength of the first support body is not enough, and the support effect for the battery cell group and the first support member is poor. When L4 > 1.4 mm, the thickness of the first support body is too large, which occupies a large amount of space of the battery, so that the energy density of the battery is low.

As an optional technical solution of the embodiment of the present application, the first support member, the first support body, and the second support body are all plate-shaped structures.

In the above technical solution, the first support member, the first support body, and the second support body are all plate-shaped structures, which occupy a small amount of space of the battery, and construction and manufacturing are facilitated.

As an optional technical solution of the embodiment of the present application, the first cavity is configured to accommodate a second heat exchange medium to adjust the temperature of the battery cell.

In the above technical solution, with the second heat exchange medium provided in the first cavity so as to exchange heat with a battery cell, and to absorb heat of the battery cell or supply heat to the battery cell to adjust the temperature of the battery cell, such that the battery cell works at the suitable temperature, improving performance of the battery.

As an optional technical solution of the embodiment of the present application, the first cavity includes at least one first sub-cavity, and the first sub-cavity extends along the first direction; and along the second direction, the first sub-cavity covers at least a portion of each battery cell in the battery cell group.

In the above technical solution, the first sub-cavity extends along the arrangement direction of the plurality of battery cells, so that the first sub-cavity can cover at least a portion of each battery cell in the battery cell group and exchange heat with each battery cell to adjust the temperature of each battery cell so that it works at a suitable temperature, improving performance of the battery.

As an optional technical solution of the embodiment of the present application, the second support member is provided with an inlet and an outlet, the first cavity further includes at least one second sub-cavity, the second sub-cavity extends along the first direction, the inlet, the first sub-cavity, the second sub-cavity, and the outlet are communicated in sequence, and the second heat exchange medium in the first sub-cavity flows in an opposite direction to the second heat exchange medium in the second sub-cavity; and along the second direction, the second sub-cavity covers at least a portion of each battery cell in the battery cell group.

In the above technical solution, the second sub-cavity extends along the arrangement direction of the plurality of battery cells, so that the second-cavity can cover at least a portion of each battery cell in the battery cell group and exchange heat with each battery cell to adjust the temperature of each battery cell so that it works at a suitable temperature, improving performance of the battery. The inlet, the first sub-cavity, the second sub-cavity, and the outlet are communicated in sequence, and both the first sub-cavity and the second sub-cavity exchange heat with each battery cell. In this way, the first sub-cavity and the second sub-cavity are fully utilized, which may improve heat exchange efficiency and ensure temperature uniformity for the plurality of battery cells.

As an optional technical solution of the embodiment of the present application, the first cavity further includes a third sub-cavity, and along the first direction, the third sub-cavity is located at one end of the first sub-cavity and the second sub-cavity to communicate the first sub-cavity and the second sub-cavity.

In the above technical solution, with the third sub-cavity provided and the first sub-cavity and the second sub-cavity communicated, the second heat exchange medium is enabled to enter from the first sub-cavity into the second sub-cavity, to achieve circular flow of the second heat exchange medium.

As an optional technical solution of the embodiment of the present application, the second support member includes two heat exchange zones, the two heat exchange zones are arranged along a third direction, the first direction, the second direction, and the third direction are perpendicular to one another, each of the heat exchange zones is provided with at least one of the first sub-cavities and at least one of the second sub-cavities, and the first sub-cavity and the second sub-cavity located in the same heat exchange zone are communicated.

In the above technical solution, with the two heat exchange zones provided, the two heat exchange zones share an inlet and an outlet. After the second heat exchange medium enters the first cavity from the inlet, it enters the first sub-cavities of the two heat exchange zones, respectively, are gathered, respectively, to the second sub-cavities of the two heat exchange zones, and are then discharged from the outlet to achieve a circulation. In this way, space can be fully utilized to allow for heat exchange of the battery cell group and help reduce flow resistance.

As an optional technical solution of the embodiment of the present application, each of the heat exchange zones is provided with a plurality of first sub-cavities, and the plurality of first sub-cavities are arranged along the third direction.

In the above technical solution, with the plurality of first sub-cavities provided and the plurality of first sub-cavities being arranged along the third direction, the plurality of first sub-cavities are enabled to cover most area of each battery cell. Since the second heat exchange medium enters the first sub-cavities from the inlet, heat exchange effect for the first sub-cavities is good. The first sub-cavities cover most area of each battery cell to achieve a good heat exchange effect. Additionally, the plurality of first sub-cavities correspond to one second sub-cavity. After the second heat exchange medium enters the second sub-cavity from the plurality of first sub-cavities, the flowing speed becomes higher, such that even if the heat exchange effect of the second heat exchange medium in the second sub-cavity is slightly poor, but as the flowing speed is higher, a good heat exchange effect can also be achieved. Therefore, the heat exchange effect for each battery cell is good, and there will be no situation where a difference of temperature between the battery cell close to the outlet position and the battery cell close to the inlet position is too large.

As an optional technical solution of the embodiment of the present application, the area of the first surface is greater than that of the second surface.

In the above technical solution, with the area of the first surface being greater than that of the second surface, space defined by the two first surfaces and the four second surfaces is large, facilitating accommodating of an electrode assembly.

As an optional technical solution of the embodiment of the present application, the battery cell includes a housing, an end cover, and an electrode assembly, the electrode assembly is accommodated in the housing, the housing has an opening and a flanging portion formed at the edge of the opening, the end cover covers the opening, and the end cover is connected with the flanging portion to form the flange portion.

In the above technical solution, the flange portion is formed by connecting the end cover and the flanging portion of the housing. If the flange portion is damaged, connection between the end cover and the housing fails, resulting in damage to the battery cell. Therefore, with the first recess to avoid the flange portion, the flange portion does not need to bear force, reducing the risk of damage to the flange portion due to force bearing, thus also reducing the risk of damage to the battery cell, and extending the lifespan of the battery.

In a second aspect, an embodiment of the present application provides an electrical device, and the electrical device includes a battery described above.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
Fig. 1 is a structural schematic view of a vehicle provided in some embodiments of the present application;
Fig. 2 is an exploded view of a battery provided in some embodiments of the present application;
Fig. 3 is a structural schematic view of a battery provided in some embodiments of the present application;
Fig. 4 is a top schematic view of a battery provided in some embodiments of the present application;
Fig. 5 is a sectional view of position D-D in Fig. 4;
Fig. 6 is an enlarged view of position E in Fig. 5;
Fig. 7 is a structural schematic view of a first support member provided in some embodiments of the present application;
Fig. 8 is a structural schematic view of a second support body provided in some embodiments of the present application;
Fig. 9 is a flowing direction schematic view of a second heat exchange medium provided in some embodiments of the present application; and
Fig. 10 is an exploded view of a battery cell provided in some embodiments of the present application.

Numerals: 10-box body; 11-first portion; 12-second portion; 20-battery cell group; 21-battery cell; 211-first surface; 212-second surface; 213-flange portion; 214-housing; 2141-flanging portion; 215-end cover; 216-electrode assembly; 30-first support member; 31-first recess; 32-protrusion; 33-second cavity; 34-second recess; 40-second support member; 50-heat conducting layer; 41-first support body; 42-second support body; 421-first cavity; 422-partition; 423-groove; 424-heat exchange zone; 4241-first sub-cavity; 4242-second sub-cavity; 4243-third sub-cavity; 4244-dividing chamber; 4245-combining chamber; 4246-inlet; 4247-outlet; 100-battery; 200-controller ;300-motor; and 1000-vehicle.

### DETAILED DESCRIPTION

For the objectives, technical solutions and advantages of the embodiments of the present application to be clearer, the technical solutions in the embodiments of the present application will be clearly described below in conjunction with the drawings in the embodiments of the present application, and it is apparent that the described embodiments are a part of the embodiments of the present application rather than all the embodiments. Based on the embodiments in the present application, all other embodiments obtained by those of ordinary skill in the art without creative effort fall within the protective scope of the present application.

Unless otherwise defined, all technical and scientific terms used in the present application have the same meaning as commonly understood by those skilled in the art belonging to the technical field of the present application; the terms in the present application used in the applied Specification are intended only for the purpose of describing specific embodiments and are not intended to limit the present application; the terms "including" and "having" and any variations thereof in the Specification and the Claims of the present application and in the description of drawings above are intended to cover non-exclusive inclusion. The terms "first", "second" and so on in the Specification and Claims of the present application or in the appended drawings above are used to distinguish different objects, not to describe a particular sequence or primary-secondary relationship.

Reference in the present application to "embodiment" means that a particular feature, structure, or characteristic described in connection with the embodiment may be contained in at least one embodiment of the present application. The appearance of this phrase in various places in the Specification does not necessarily refer to the same embodiment, nor is it a separate or alternative embodiment that is mutually exclusive with other embodiments.

In the description of the present application, it is to be noted that unless otherwise expressly specified and limited, the terms "mount," "connected," "connect" and "attach" should be broadly understood, for example, they may be a fixed connection or a detachable connection or an integral connection; or may be a direct connection, or an indirect connection through an intermediate medium; or may be a communication between the interiors of two elements. A person of ordinary skill in the art can understand specific meanings of these terms in this application based on specific situations.

The term "and/or" in this application describes only an association relationship for describing associated objects and represents that three relationships may exist. For example, A and/or B may represent the following three cases: Only A exists, both A and B exist, and only B exists. In addition, the character "/" in the present application generally means that the associated objects before and after it are in an "or" relationship.

In the embodiments of the present application, the same reference numerals represent the same components, and for the sake of conciseness, detailed descriptions of the same components in different embodiments are omitted. It should be understood that the thickness, length, width, and other dimensions of various components in the embodiments of the present application shown in the drawings, as well as the overall thickness, length, and width of an integrated apparatus, are only exemplary illustrations and should not constitute any limitation to the present application.

In the present application, "a plurality of" refers to two (inclusive) or more.

In the present application, a battery cell may include a lithium ion secondary battery cell, a lithium ion primary battery cell, a lithium sulfur battery cell, a sodium/lithium ion battery cell, a sodium ion battery cell, or a magnesium ion battery cell etc., which will not be limited in the embodiments of the present application.

The battery mentioned in the embodiments of the present application refers to a single physical module including a plurality of battery cells to provide a higher voltage and capacity. For example, the battery mentioned in the present application may include a battery module, a battery pack, or the like. The battery generally includes a box body for encapsulating a plurality of battery cells. The box body may prevent liquids or other foreign matters from affecting charging or discharging of the battery cells.

Batteries have found broad applications in the field of new energy, such as electric vehicles and new energy vehicles. New energy vehicles and electric vehicles have become a new development trend in the vehicle industry. Many design factors, such as energy density, discharge capacity, charge-discharge rate and other performance parameters, should be considered in the development of the battery technology. Additionally, lifespan of the battery also needs to be considered. However, current battery lifespan is short.

The inventor has found, via further studies, that a flange portion protruding from a surface of a battery cell is formed on the battery cell of a battery. When the battery cell is placed within a box body, the flange portion directly contacts a support structure within the box body or an inner wall of the box body to bear force, resulting in proneness of the flange portion to damage. If the flange portion is damaged, damage can be caused to the battery cell such that the battery's lifespan is shortened.

Additionally, if the battery experiences a collision or an external impact, the external impact is easily transferred to the flange portion, such that the flange portion is damaged, thereby accelerating the damage of the battery cell and further shortening the lifespan of the battery.

In view of this, an embodiment of the present application provides a battery. A battery cell is supported by providing a first support member and a second support member. The first support member is provided with a first recess that avoids the flange portion. In this way, the first support member will avoid the flange portion when supporting the battery cell, such that the flange portion does not need to bear force, reducing the risk of damage to the flange portion due to force bearing. A first cavity is formed inside the second support member. When the battery experiences a collision or an external impact, the first cavity can provide buffering and absorb energy, reducing the effect of the external impact on the battery cell, improving anti-collision capability of the battery, and reducing the possibility of damage to the flange portion due to the external impact so that the battery has a longer lifespan.

The technical solution described in the embodiment of the present application is suitable for batteries and electrical devices using batteries.

The electrical device may be a vehicle, a mobile phone, a portable device, a laptop computer, a ship, a spacecraft, an electric toy, an electric tool etc. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. The electrical device is not specially limited in the embodiments of the present application.

For convenience of description, the electrical device being a vehicle 1000 is taken as an example for description in the following embodiments.

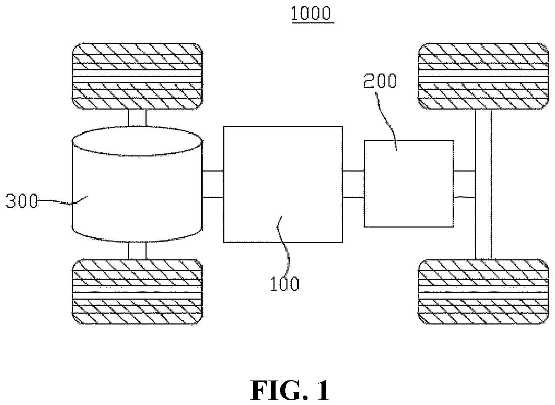

Referring to Fig. 1, Fig. 1 is a structural schematic view of a vehicle 1000 provided in some embodiments of the present application. The vehicle 1000 may be a fuel vehicle, a gas vehicle, or a new energy vehicle. The new energy vehicle may be a battery electric vehicle, a hybrid electric vehicle, an extended-range vehicle etc. The vehicle 1000 is internally provided with a battery 100, and the battery 100 may be provided at the bottom or head or tail of the vehicle 1000. The battery 100 may be used to power the vehicle 1000. For example, the battery 100 may be used as an operating power source for the vehicle 1000. The vehicle 1000 may further include a controller 200 and a motor 300. The controller 200 is used to control the battery 100 to power the motor 300, for example, to meet working power demands during starting, navigation and driving of the vehicle 1000.

In some embodiments of the present application, the battery 100 not only may serve as an operating power source for the vehicle 1000, but also may serve as a driving power source for the vehicle 1000, thus replacing or partially replacing fuel or natural gas to provide driving power for the vehicle 1000.

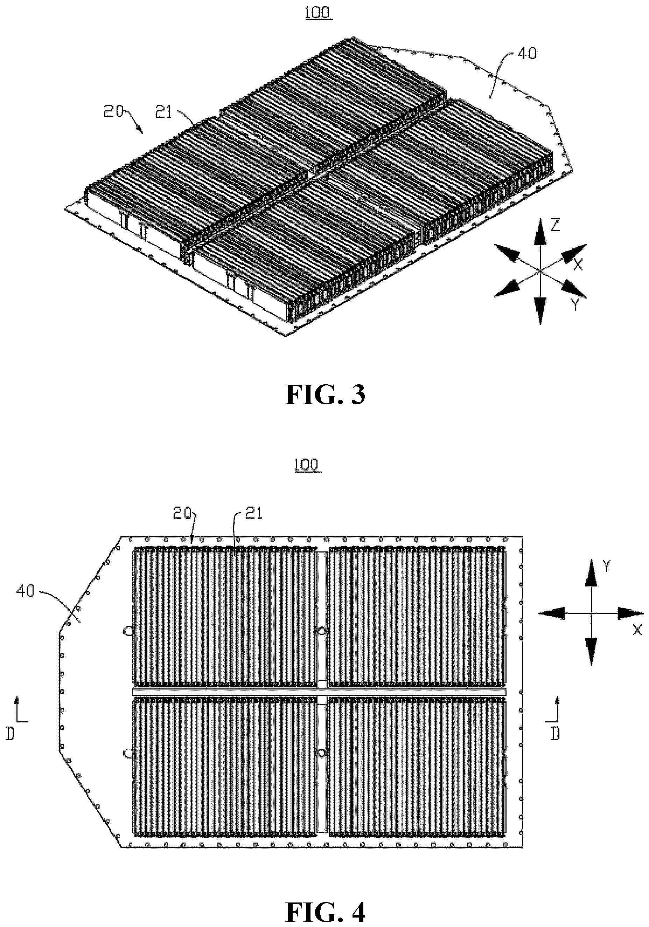

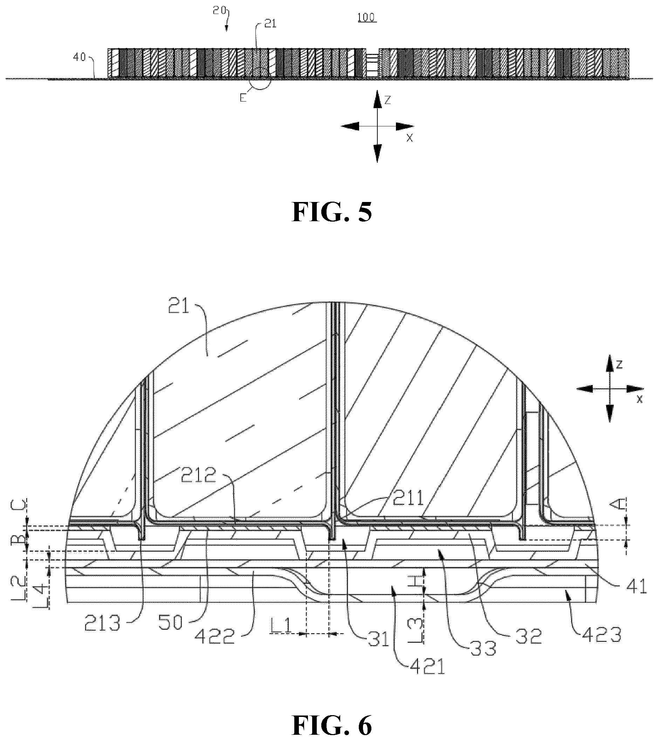

Referring to Figs. 2, 3, 4, 5, and 6, Fig. 2 is an exploded view of a battery 100 provided in some embodiments of the present application. Fig. 3 is a structural schematic view of a battery 100 provided in some embodiments of the present application. Fig. 4 is a top schematic view of a battery 100 provided in some embodiments of the present application. Fig. 5 is a sectional view of position D-D in Fig. 4. Fig. 6 is an enlarged view of position E in Fig. 5. An embodiment of the present application provides a battery 100. The battery 100 includes a battery cell group 20, a first support member 30, and a second support member 40. The battery cell group 20 includes a plurality of battery cells 21 arranged along a first direction. Each of the battery cells 21 includes two first surfaces 211 provided oppositely along the first direction and four second surfaces 212 provided around the first surfaces 211. Each of the battery cells 21 has a flange portion 213 protruding from the second surface 212. The first support member 30 and the second support member 40 are used to support the battery cell group 20. The battery cell group 20, the first support member 30, and the second support member 40 are sequentially disposed along a second direction. The second direction is perpendicular to the first direction. A first recess 31 for avoiding the flange portion 213 is provided on a side of the first support member 30 facing the battery cell group 20, and a first cavity 421 is formed inside the second support member 40.

The battery cell group 20 includes a plurality of battery cells 21, and the plurality of battery cells 21 are arranged along the first direction. The battery cell 21 refers to a smallest unit constituting the battery 100. The plurality of battery cells 21 may be connected in series or parallel or series-parallel connection, and the series-parallel connection means that the plurality of battery cells 21 are connected in both series and parallel. The plurality of battery cells 21 may be directly connected in series or parallel or series-parallel. Certainly, the battery 100 may also be in a form that a plurality of battery cells 21 are firstly connected in series or in parallel or in series-parallel connection to form a battery cell group 20, and then a plurality of battery cell groups 20 are connected in series or in parallel or in series-parallel connection to form a whole. The battery 100 may further include other structures, for example, the battery 100 may further include a bus component for electrically connecting the plurality of battery cells 21.

Each of the battery cells 21 may be a secondary battery cell 21 or primary battery cell 21; or a lithium-sulfur battery cell 21, sodium-ion battery cell 21, or magnesium-ion battery cell 21, but is not limited thereto.

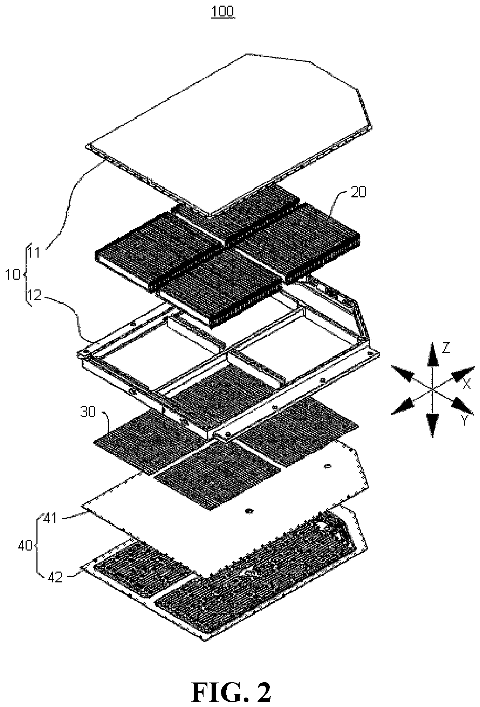

Here, the first direction refers to an arrangement direction of the plurality of battery cells 21. Referring to Figs. 2-6, the first direction is an X direction as shown in the figures. The second direction is perpendicular to the first direction. The second direction is a stacking direction of the battery cell group 20, the first support member 30, and the second support member 40. The second direction is a Z direction as shown in the figures.

The first surface 211 is a surface of the battery cell 21 located on one side of the first direction. The battery cell 21 has two first surfaces 211. The two first surfaces 211 are disposed oppositely in the first direction.

The second surface 212 is a surface of the battery cell 21 located between the two first surfaces 211 along the first direction. The battery cell 21 has four second surfaces 212, and the four second surfaces 212 are disposed around the first surfaces 211. Here "around" means that the four second surfaces 212 are arranged along a circumferential direction of the first surfaces 211. Along the first direction, a projection of the second surface 212 on the first surface 211 may be located within the first surface 211, and at this point, there is a gap between the second surface 212 and an edge of the first surface 211. In other words, the four second surfaces 212 being disposed around the first surfaces 211 is intended to emphasize an arrangement form of the four second surfaces 212, rather than to limit that the four second surfaces 212 embrace the first surfaces 211.

The flange portion 213 is a portion of the battery cell 21 that protrudes from the second surface 212. The flange portion 213 may be a flange formed on a surface of the battery cell 21.

The first support member 30 and the second support member 40 are both components for supporting the battery cell group 20. The first support member 30 supports the battery cell group 20, and the second support member 40 supports the first support member 30 and the battery cell group 20. The first recess 31 is a groove-shaped structure provided at the first support member 30. The first recess 31 is recessed from a side of the first support member 30 facing the battery cell group 20 to a side of the first support member 30 facing away from the battery cell group 20. It is to be noted that the first recess 31 may penetrate the side of the first support member 30 facing away from the battery cell group 20, and may not penetrate the side of the first support member 30 facing away from the battery cell group 20. When the first recess 31 penetrates the side of the first support member 30 facing away from the battery cell group 20, the first recess 31 is a through hole provided in the first support member 30. The first recess 31 may be shaped in various ways, such as stamping, milling etc. The first recess 31 accommodates at least a portion of the flange portion 213, and the flange portion 213 does not contact the first support member 30, thereby preventing the flange portion 213 from bearing force.

The first cavity 421 is a hollow portion of the second support member 40. The first cavity 421 may be communicated to the outside of the second support member 40, or may be isolated from the outside of the second support member 40.

The first support member 30 of the battery 100 is provided with the first recess 31 that avoids the flange portion 213. In this way, the first support member 30 will avoid the flange portion 213 when supporting the battery cell 21, so that the flange portion 213 does not need to bear force, reducing the risk of damage to the flange portion 213 due to force bearing. The first cavity 421 is formed inside the second support member 40. When the battery 100 experiences a collision, the first cavity 421 can provide buffering and absorb energy, reducing the effect of an external impact on the battery cell 21, improving anti-collision capability of the battery 100, and reducing the possibility of damage to the flange portion 213 due to the external impact so that the battery 100 has a longer lifespan.

The battery 100 further includes a box body 10. The battery cell group 20 is accommodated within the box body 10. Here, the box body 10 is used to provide an accommodating space for the battery cell group 20, and the box body 10 may be of various structures. In some embodiments, the box body 10 may include a first portion 11 and a second portion 12. The first portion 11 and the second portion 12 are covered by each other, and the first portion 11 and the second portion 12 jointly define an accommodating space for accommodating the battery cell group 20. The second portion 12 may be a hollow structure with one end open, the first portion 11 may be a plate-shaped structure, and the first portion 11 covers the open side of the second portion 12, so that the first portion 11 and the second portion 12 jointly define the accommodating space. It is also possible that both the first portion 11 and the second portion 12 are of a hollow structure with one side open, and the open side of the first portion 11 covers the open side of the second portion 12.

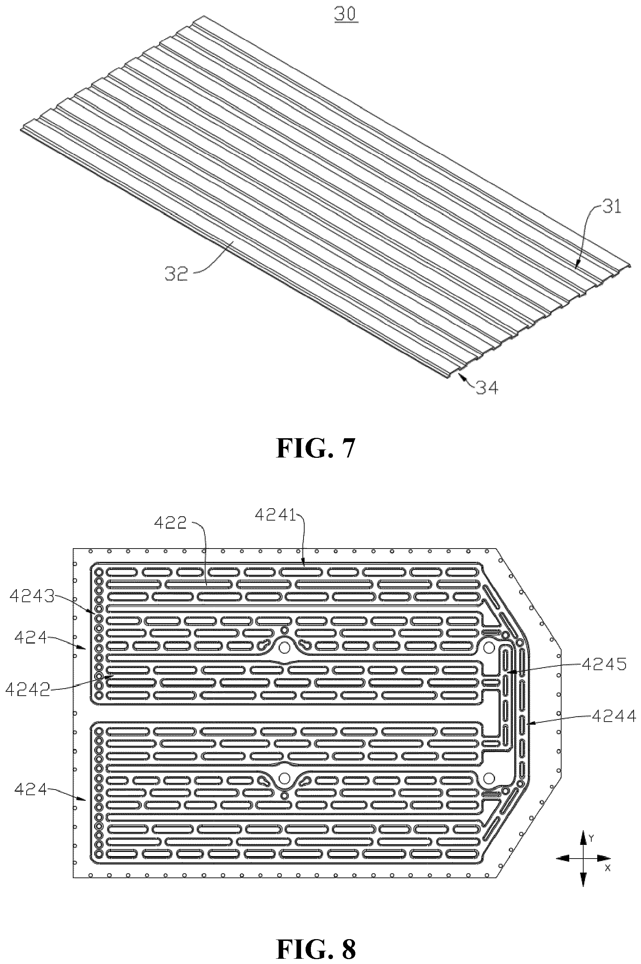

Referring to Fig. 6 and Fig. 7, Fig. 7 is a structural schematic view of a first support member 30 provided in some embodiments of the present application. In some embodiments, a side of the first support member 30 facing the battery cell group 20 is provided with a plurality of protrusions 32, and each of the protrusions 32 correspondingly supports one battery cell 21. A first recess 31 is formed between two adjacent protrusions 32.

The protrusion 32 is a portion of the first support member 30 that plays a role of supporting the battery cell 21. The first support member 30 includes a plurality of protrusions 32. The plurality of protrusions 32 are arranged along a first direction. The protrusions 32 are in one-to-one correspondence with the battery cells 21, such that each protrusion 32 correspondingly supports one battery cell 21.

The first recess 31 is formed between two adjacent protrusions 32, and there is one protrusion 32 between two adjacent first recesses 31. Along the first direction, the protrusions 32 and the first recesses 31 are alternately distributed, forming a wavy structure. In some embodiments, the protrusions 32 in one-to-one correspondence with the first recesses 31, the protrusion 32 supports one battery cell 21, and the first recess 31 correspondingly avoids a flange portion 213 of this battery cell 21.

One first support member 30 is provided with a plurality of protrusions 32 thereon to correspondingly support a plurality of battery cells 21. The plurality of protrusions 32 connected together have good strength and can play a good role of supporting the battery cell group 20. The first recess 31 is formed between adjacent two of the protrusions 32 to avoid the flange portion 213 of the battery cell 21 supported by the protrusions 32, so that the flange portion 213 of the battery cell 21 supported by the protrusions 32 does not need to bear force, thereby reducing the risk of damage to the flange portion 213 due to force bearing such that the battery 100 has a longer lifespan.

In some embodiments, a heat conducting layer 50 is disposed between the protrusion 32 and the battery cell 21.

The heat conducting layer 50 is formed by filling of a heat conducting material between the protrusion 32 and the battery cell 21. The heat conducting material has a high heat conductivity. The higher the heat conductivity, the better conducting performance for heat. For example, heat conducting glue may be applied to fill between the protrusion 32 and the battery cell 21 to form the heating conducting layer 50.

With the heat conducting layer 50 disposed between the protrusion 32 and the battery cell 21, heat conducting efficiency is improved, and heat exchange between the battery cell 21 and the first support member 30 and second support member 40 to adjust the temperature of the battery cell 21 is facilitated, so that the battery cell 21 works at the suitable temperature, improving performance of the battery 100. Additionally, as the protrusion 32 is a portion of the first support member 30 that is relatively close to the battery cell 21, disposing the heat conducting layer 50 between the protrusion 32 and the battery cell 21 can reduce consumption of material for disposing the heat conducting layer 50.

Referring to Fig. 6, in some embodiments, along the second direction, the length of the flange portion 213 protruding from the second surface 212 is A, the depth of the first recess 31 is B, the thickness of the heat conducting layer 50 is C, and they satisfy: B + C - A ≥ 1.5 mm.

A represents the length of the flange portion 213 protruding from the second surface 212 along the second direction, that is, a distance along the second direction between a surface of the flange portion 213 facing away from the second surface 212 and the second surface 212.

B represents the depth of the first recess 31, that is, a distance along the second direction between a bottom face of the first recess 31 and a surface of the protrusion 32 facing the battery cell 21.

C represents the thickness of the heat conducting layer 50, and along the second direction, the thickness of the heat conducting layer 50 is equal to the distance between the surface of the protrusion 32 facing the battery cell 21 and the second surface 212.

A sum of the depth of the first recess 31 and the thickness of the heat conducting layer 50 minus the length of the flange portion 213 protruding from the second surface 212 along the second direction may be valued as: B + C - A = 1.5 mm, 1.6 mm, 1.7 mm, 1.8 mm, 1.9 mm, 2 mm etc.

The sum of the depth of the first recess 31 and the thickness of the heat conducting layer 50 is the distance between the bottom face of the first recess 31 and the second surface 212 in the second direction, that is, B + C is the distance between the bottom face of the first recess 31 and the second surface 212 in the second direction. Since A is the length of the flange portion 213 protruding from the second surface 212, B + C- A represents a distance in the second direction between a surface of the flange portion 213 facing the bottom face of the first recess 31 and the bottom face of the first recess 31. The distance in the second direction between the surface of the flange portion 213 facing the bottom face of the first recess 31 and the bottom face of the first recess 31 is greater than or equal to 1.5 mm. Even if the heat conducting layer 50 experiences a certain deformation and becomes thinner during use of the battery 100, the flange portion 213 is not prone to damage due to contact with the bottom face of the first recess 31, or when an impact occurs, there can be a certain margin for the flange portion 213 to move closer to the bottom face of the first recess 31, reducing the possibility of damage due to a collision between the flange portion 213 and the bottom face of the first recess 31, and extending lifespan of the battery 100.

In some embodiments, 0.5 mm ≤ C ≤ 2.5 mm.

Along the second direction, the thickness of the heat conducting layer 50 may be valued as: C = 0.5 mm, 0.8 mm, 1 mm, 1.2 mm, 1.5 mm, 1.8 mm, 2 mm, 2.2 mm, 2.5 mm etc.

By enabling the thickness of the heat conducting layer 50 to be greater than or equal to 0.5 mm, and less than or equal to 2.5 mm, a good heat conducting result can be achieved. When C < 0.5 mm, production is difficult and production cost is high. However, when C > 2.5 mm, the heat conducting result is poor.

Referring to Fig. 6 and Fig. 7, in some embodiments, a second recess 34 is formed at the position, corresponding to the protrusion 32, on a side of the first support member 30 facing away from the battery cell group 20. The second support member 40 covers the second recess 34 to form a second cavity 33.

The second recess 34 is a groove-shaped structure on the first support member 30 located on the side of the first support member 30 facing away from the battery cell group 20. The second recess 34 is recessed from the side of the first support member 30 facing away from the battery cell group 20 to the side of the first support member 30 facing the battery cell group 20. It is to be noted that the second recess 34 may penetrate the side of the first support member 30 facing the battery cell group 20, and may not penetrate the side of the first support member 30 facing the battery cell group 20. When the second recess 34 penetrates the side of the first support member 30 facing the battery cell group 20, the second recess 34 is a through hole provided in the first support member 30. The second recess 34 may be shaped in various ways, such as stamping, milling etc.

The position where the second recess 34 is disposed corresponds to that of the protrusion 32 to reduce the thickness of the position where the protrusion 32 is located.

The second support member 40 is connected to the side of the first support member 30 facing away from the battery cell group 20. The second support member 40 blocks an opening of the second recess 34 in a direction facing away from the battery cell group 20 to enclose the second recess 34 to form a second cavity 33. The second cavity 33 may be communicated to the inside of the box body 10, or may be isolated from the inside of the box body 10.

By forming the second recess 34 on the side of the first support member 30 facing away from the battery cell group 20 and enabling the position of the second recess 34 to correspond to the protrusion 32, on the one hand, it is possible that use of materials of the first support member 30 is reduced and production cost is reduced, while strength of the position where the protrusion 32 is located is guaranteed; on the other hand, the second cavity 33 formed by the second support member 40 covering the second recess 34 can provide buffering and absorb energy, reducing the effect of an external impact on the battery cell 21, improving the anti-collision capability of the battery 100, and reducing the possibility of damage to the flange portion 213 due to the external impact such that the battery 100 has a longer lifespan.

In some embodiments, a first heat exchange medium is disposed in the second cavity 33 to adjust the temperature of the battery cell 21.

The first heat exchange medium is a medium that allows heat exchange. The temperature of the first heat exchange medium is generally lower than or higher than that of the battery cell 21. For example, when the battery cell 21 needs to be cooled down, the temperature of the first heat exchange medium is lower than that of the battery cell 21, and heat of the battery cell 21 will be transferred to the first heat exchange medium, such that the temperature of the battery cell 21 is lowered. For another example, when the battery cell 21 needs to be warmed up, the temperature of the first heat exchange medium is higher than that of the battery cell 21, and heat of the first heat exchange medium will be transferred to the battery cell 21, such that the temperature of the battery cell 21 is raised.

The first heat exchange medium may be a gaseous medium, such as air. The first heat exchange medium may be a liquid medium, such as water.

In some embodiments, the first heat exchange medium may also be heat conducting glue to facilitate quick conduction of heat between the battery cell 21 and the second support member 40.

With the first heat exchange medium provided in the second cavity 33 so as to exchange heat with the battery cell 21, and to absorb heat of the battery cell 21 or supply heat to the battery cell 21 to adjust the temperature of the battery cell 21, the battery cell 21 is allowed to work at the suitable temperature, improving performance of the battery 100.

Referring to Fig. 6, in some embodiments, along the first direction, the minimum distance between the flange portion 213 and the protrusion 32 is L1, which satisfies: L1 ≥ 0.5 mm.

L1 represents the minimum distance between the flange portion 213 and the protrusion 32, that is, the minimum distance between a surface of the flange portion 213 facing the protrusion 32 and a surface of the protrusion 32 facing the flange portion 213. As shown in Fig. 6, the surface of the protrusion 32 facing the flange portion 213 is a slope. Along the first direction, a lower end of the slope is closer to the surface of the flange portion 213 facing the protrusion 32 than an upper end of the slope. Therefore, along the first direction, a distance between the lower end of the slope and the surface of the flange portion 213 facing the protrusion 32 is the minimum distance between the flange portion 213 and the protrusion 32, that is, along the first direction, the distance between the lower end of the slope and the surface of the flange portion 213 facing the protrusion 32 is L1.

Along the first direction, the minimum distance between the flange portion 213 and the protrusion 32 may be valued as: L1 = 0.5 mm, 0.8 mm, 1 mm, 1.2 mm, 1.5 mm, 2 mm, 3 mm etc.

By enabling the minimum distance between the flange portion 213 and the protrusion 32 to be greater than or equal to 0.5 mm, when an impact occurs, there can be a certain margin for the flange portion 213 to move closer to the protrusion 32, reducing the possibility of damage due to a collision between the flange portion 213 and the protrusion 32, and extending the lifespan of the battery 100. Additionally, assembly is facilitated with L1 ≥ 0.5 mm.

Referring to Fig. 6, in some embodiments, the thickness of the first support member 30 at the position of the first recess 31 is L2, which satisfies: 0.6 mm ≤ L2 ≤ 1.8 mm.

L2 represents the thickness of the first support member 30 at the position of the first recess 31. In other words, L2 represents the thickness of the remaining portion of this position on the first support member 30 after the first recess 31 is provided. In the embodiment shown in Fig. 6, L2 also represents a distance along the second direction between a bottom face of the first recess 31 and a surface of the first support member 30 facing away from the battery cell 21.

The thickness of the first support member 30 at the position of the first recess 31 may be valued as: L2 = 0.6 mm, 0.8 mm, 1 mm, 1.2 mm, 1.4 mm, 1.6 mm, 1.8 mm etc.

By enabling the thickness of the first support member 30 at the position of the first recess 31 to be in the range of 0.6-1.8 mm, it is possible to ensure that the battery 100 has a high energy density, while the first support member 30 has enough strength. When L2 < 0.6 mm, the strength of the first support member 30 is not enough, and the support effect for the battery cell group 20 is poor. When L2 > 1.8 mm, the thickness of the first support member 30 is too large, which occupies a large amount of space of the battery 100, so that the energy density of the battery 100 is low.

In this embodiment, the thickness of the first support member 30 at various positions is uniform. Therefore, the thickness of the first support member 30 at the position of the first recess 31 may characterize the thickness of the first support member 30.

Referring to Fig. 6, in some embodiments, the second support member 40 includes a first support body 41 and a second support body 42. The first support member 30, the first support body 41, and the second support body 42 are disposed sequentially along the second direction. The first support body 41 and the second support body 42 jointly define a first cavity 421.

The first support body 41 and the second support body 42 are two portions that form the first cavity 421 by enclosing. The first support body 41 supports the battery cell group 20 and the first support member 30, and the second support body 42 supports the battery cell group 20, the first support member 30, and the first support body 41. The first support body 41 is located between the first support member 30 and the second support body 42.

With the first support body 41 and the second support body 42 jointly defining the first cavity 421, and the first cavity 421 being independent of the first support member 30 (the first cavity 421 is unrelated to the arrangement form of the first support member 30), the position and form of the first cavity 421 may be freely designed as needed to achieve a good buffering and energy-absorbing result.

In some embodiments, a third recess is formed on a side of the second support body 42 facing the first support body 41. The first support body 41 covers the third recess to form the first cavity 421.

The third recess is a groove-shaped structure on the second support body 42 located on the side of the second support body 42 facing the first support body 41. The third recess is recessed from the side of the second support body 42 facing the battery cell group 20 to a side of the second support member 42 facing away from the battery cell group 20. The second recess 34 may be shaped in various ways, such as stamping, milling etc.

The first support body 41 is connected to the side of the second support body 42 facing the battery cell group 20. The first support body 41 blocks an opening of the third recess in a direction facing the battery cell group 20 to enclose the third recess to form the first cavity 421. The first cavity 421 may be communicated to the inside of the box body 10, or may be isolated from the inside of the box body 10.

With the third recess formed on the side of the second support body 42 facing the first support body 41 and with the first cavity 421 being formed by the first support body 41 covering the third recess, manufacturing is simple and convenient.

In further embodiments, a third recess is formed on a side of the first support body 41 facing the second support body 42. The second support body 42 covers the third recess to form a first cavity 421. In yet further embodiments, a third recess is formed on each of the side of the first support body 41 facing the second support body 42 and the side of the second support body 42 facing the first support body 41. The first support body 41 and the second support body 42 are connected to jointly define a first cavity 421.

In some embodiments, the depth of the third recess is H, which satisfies: 2.5 mm ≤ H ≤ 4.5 mm.

H represents the depth of the third recess, that is, a distance along the second direction between a bottom face of the third recess and a surface of the second support body 42 close to the battery cell group 20.

The depth of the third recess may be valued as: H = 2.5 mm, 2.8 mm, 3 mm, 3.2 mm, 3.5 mm, 3.8 mm, 4 mm, 4.2 mm, 4.5 mm, etc..

With the depth of the third recess defined between 2.5 and 4.5 mm to ensure that the third recess has enough depth, there is a good buffering and energy-absorbing result. Further, since the depth of the third recess can affect the thickness of the second support body 42 and thus the energy density of the battery cell 21, the depth of the third recess cannot be too large. When H < 2.5 mm, the depth of the third recess is shallow, and the buffering and energy-absorbing result is poor. When H > 4.5 mm, the depth of the third recess is too large, which enables the thickness of the second support body 42 to be larger, leading to large occupation of space of the battery 100, and resulting in a low energy density of the battery 100.

In some embodiments, the thickness of the second support body 42 at the position of the third recess is L3, which satisfies: 0.4 mm ≤ L3 ≤ 1.6 mm.

L3 represents the thickness of the second support body 42 at the position of the third recess. In other words, L3 represents the thickness of the remaining portion of this position on the second support body 42 after the third recess is provided. In the embodiment shown in Fig. 6, L3 also represents a distance along the second direction between a bottom face of the third recess and a surface of the second support member 42 facing away from the battery cell 21.

The thickness of the second support body 42 at the position of the third recess may be valued as: L3 = 0.4 mm, 0.6 mm, 0.8 mm, 1 mm, 1.2 mm, 1.4 mm, 1.6 mm etc.

By enabling the thickness of the second support body 42 at the position of the third recess to be in the range of 0.4-1.6 mm, it is possible to ensure that the battery 100 has a high energy density, while the second support body 42 has enough strength. When L3 < 0.4 mm, the strength of the second support body 42 is not enough, and the support effect for the battery cell group 20, the first support member 30 and the first support body 41 is poor. When L3 > 1.6 mm, the thickness of the second support body 42 is too large, which occupies a large amount of space of the battery 100, so that the energy density of the battery 100 is low.

In this embodiment, the thickness of the second support body 42 at various positions is uniform. Therefore, the thickness of the second support body 42 at the position of the third recess may characterize the thickness of the second support body 42.

In some embodiments, the thickness of the first support body 41 is L4, which satisfies: 0.2 mm ≤ L4 ≤ 1.4 mm.

L4 represents the thickness of the first support body 41, that is, a distance along the second direction between a surface of the first support body 41 facing the battery cell group 20 and a surface of the first support body 41 facing away from the battery cell group 20.

The thickness of the first support body 41 may be valued as: L4 = 0.2 mm, 0.4 mm, 0.6 mm, 0.8 mm, 1 mm, 1.2 mm, 1.4 mm etc.

By enabling the thickness of the first support body 41 to be in the range of 0.2-1.4 mm, it is possible to ensure that the battery 100 has a high energy density, while the first support body 41 has enough strength. When L4 < 0.4 mm, the strength of the first support body 41 is not enough, and the support effect for the battery cell group 20 and the first support member 30 is poor. When L4 > 1.4 mm, the thickness of the first support body 41 is too large, which occupies a large amount of space of the battery 100, so that the energy density of the battery 100 is low.

In some embodiments, the first support member 30, the first support body 41, and the second support body 42 are all plate-shaped structures.

The first recess 31 and/or the second recess 34 on the first support member 30 may be formed by stamping. The first support body 41 may be of flat plate structure. The third recess on the second support body 42 may also be formed by stamping.

The first support member 30, the first support body 41, and the second support body 42 are all plate-shaped structures, which occupy a small amount of space of the battery 100, and construction and manufacturing are facilitated.

In some embodiments, the first cavity 421 is configured to accommodate a second heat exchange medium to adjust the temperature of the battery cell 21.

The second heat exchange medium is a medium that allows heat exchange. The temperature of the second heat exchange medium is generally lower than or higher than that of the battery cell 21. For example, when the battery cell 21 needs to be cooled down, the temperature of the second heat exchange medium is lower than that of the battery cell 21, and heat of the battery cell 21 will be transferred to the second heat exchange medium, such that the temperature of the battery cell 21 is lowered. For another example, when the battery cell 21 needs to be warmed up, the temperature of the second heat exchange medium is higher than that of the battery cell 21, and heat of the second heat exchange medium will be transferred to the battery cell 21, such that the temperature of the battery cell 21 is raised.

The second heat exchange medium may be a gaseous medium, such as air. The second heat exchange medium may be a liquid medium, such as water.

With the second heat exchange medium provided in the first cavity 421 so as to exchange heat with the battery cell 21, and to absorb heat of the battery cell 21 or supply heat to the battery cell 21 to adjust the temperature of the battery cell 21, the battery cell 21 is allowed to work at the suitable temperature, improving performance of the battery 100.

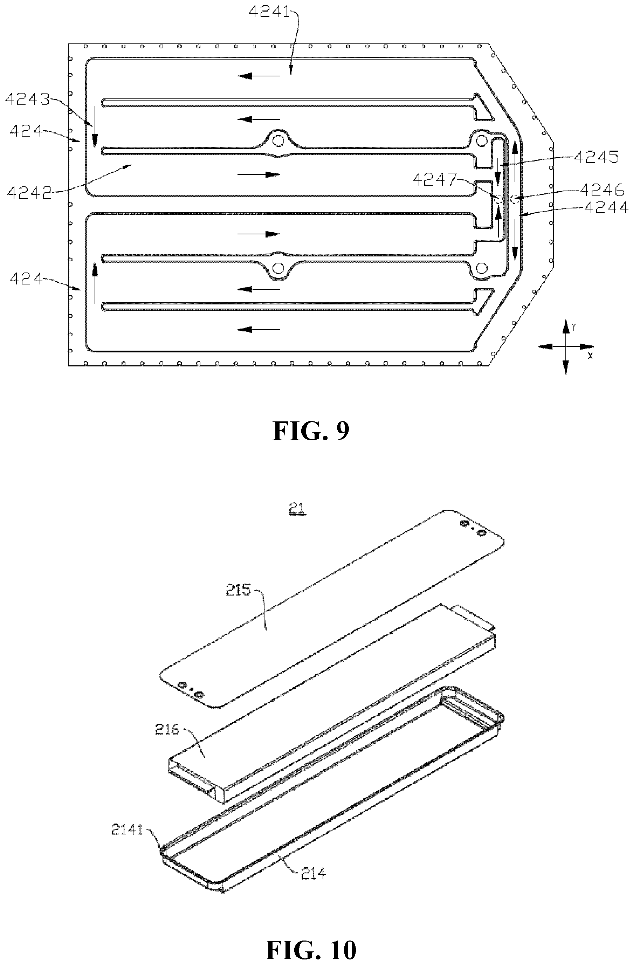

Referring to Fig. 8 and Fig. 9, Fig. 8 is a structural schematic view of a second support member 42 provided in some embodiments of the present application. Fig. 9 is a flowing direction schematic view of a second heat exchange medium provided in some embodiments of the present application. In some embodiments, the first cavity 421 includes at least one first sub-cavity 4241, and the first sub-cavity 4241 extends along the first direction. Along the second direction, the first sub-cavity 4241 covers at least a portion of each battery cell 21 in the battery cell group 20.

The first sub-cavity 4241 is a portion within the first cavity 421 extending along the first direction. The first sub-cavity 4241 is used for the second heat exchange medium to flow.

Along the second direction, one side of each battery cell 21 in the battery cell group 20 is provided with a first sub-cavity 4241. In other words, along the second direction, a projection of the first sub-cavity 4241 on the battery cell group 20 covers at least a portion of each battery cell 21 in the battery cell group 20.

Along the second direction, the first sub-cavity 4241 may cover a portion of each battery cell 21 in the battery cell group 20, or may completely cover each battery cell 21 in the battery cell group 20.

The first sub-cavity 4241 extends along the arrangement direction of a plurality of battery cells 21, so that the first sub-cavity 4241 can cover at least a portion of each battery cell 21 in the battery cell group 20 and exchange heat with each battery cell 21 to adjust the temperature of each battery cell 21 so that it works at a suitable temperature, improving performance of the battery 100.

Referring to Fig. 8 and Fig. 9, the second support member 40 is provided with an inlet 4246 and an outlet 4247. The first cavity 421 also includes at least one second sub-cavity 4242, and the second sub-cavity 4242 extends along the first direction. The inlet 4246, the first sub-cavity 4241, the second sub-cavity 4242, and the outlet 4247 are communicated in sequence. A flowing direction of the second heat exchange medium within the first sub-cavity 4241 is opposite to that of the second heat exchange medium within the second sub-cavity 4242. Along the second direction, the second sub-cavity 4242 covers at least a portion of each battery cell 21 in the battery cell group 20.

The inlet 4246 is an opening for the second heat exchange medium to flow into the first cavity 421. The inlet 4246 may be provided at the first support body 41, or may be provided at the second support body 42. For example, in some embodiments, the inlet 4246 is provided at the first support body 41. The inlet 4246 is a through hole provided at the first support body 41. The inlet 4246 communicates the outside with the first cavity 421 to facilitate entry of the second heat exchange medium into the first cavity 421 via the inlet 4246.

The outlet 4247 is an opening for the second heat exchange medium to flow out of the first cavity 421. The outlet 4247 may be provided at the first support body 41, or may be provided at the second support body 42. For example, in some embodiments, the outlet 4247 is provided at the first support body 41. The outlet 4247 is a through hole provided at the first support body 41. The outlet 4247 communicates the outside with the first cavity 421 to facilitate flowing of the second heat exchange medium out of the first cavity 421 via the outlet 4247.

It is to be noted that the inlet 4246 and outlet 4247 shown by dotted lines in the figures are intended to represent positions where the second heat exchange medium enters the first cavity 421 and where the second heat exchange medium flows out of the first cavity 421, rather than indicating the inlet 4246 and the outlet 4247 are exactly provided at the second support body 42.

The second sub-cavity 4242 is a portion within the first cavity 421 extending along the first direction. The second sub-cavity 4242 is used for the second heat exchange medium to flow. Furthermore, a flowing direction of the second heat exchange medium within the second sub-cavity 4242 is opposite to that of the second heat exchange medium within the first sub-cavity 4241. The first sub-cavity 4241 may be a medium incoming cavity for forward flow of the second heat exchange medium, and the second sub-cavity 4242 may be a medium return cavity for reverse flow of the second heat exchange medium.

Along the second direction, one side of each battery cell 21 in the battery cell group 20 is provided with a second sub-cavity 4242. In other words, along the second direction, a projection of the second sub-cavity 4242 on the battery cell group 20 covers at least a portion of each battery cell 21 in the battery cell group 20.

Along the second direction, the second sub-cavity 4242 may cover a portion of each battery cell 21 in the battery cell group 20, or may completely cover each battery cell 21 in the battery cell group 20.

In some embodiments, along the second direction, the first sub-cavity 4241 covers a portion of each battery cell 21 in the battery cell group 20, and the second sub-cavity 4242 covers another portion of each battery cell 21 in the battery cell group 20. In other words, along the second direction, the first sub-cavity 4241 and the second sub-cavity 4242 completely cover each battery cell 21 in the battery cell group 20.

The second sub-cavity 4242 extends along the arrangement direction of a plurality of battery cells 21, so that the second sub-cavity 4242 can cover at least a portion of each battery cell 21 in the battery cell group 20 and exchange heat with each battery cell 21 to adjust the temperature of each battery cell 21 so that it works at a suitable temperature, improving performance of the battery 100. The inlet 4246, the first sub-cavity 4241, the second sub-cavity 4242, and the outlet 4247 are communicated in sequence, and both the first sub-cavity 4241 and the second sub-cavity 4242 exchange heat with each battery cell 21. In this way, the first sub-cavity 4241 and the second sub-cavity 4242 are fully utilized, which may improve heat exchange efficiency and ensure temperature uniformity for the plurality of battery cells 21.

Referring to Fig. 8 and Fig. 9, in some embodiments, the first cavity 421 further includes a third sub-cavity 4243. Along the first direction, the third sub-cavity 4243 is located at one end of the first sub-cavity 4241 and second sub-cavity 4242 to communicate the first sub-cavity 4241 and the second sub-cavity 4242.

The third sub-cavity 4243 is a communicating cavity for the first sub-cavity 4241 and the second sub-cavity 4242. The third sub-cavity 4243 is located at one end of the first sub-cavity 4241 and second sub-cavity 4242 in the first direction, so that the second heat exchange medium can enter the second sub-cavity 4242 via the third sub-cavity 4243 only after completely passing through the first sub-cavity 4241 such that heat exchange of the battery cell 21 by the first sub-cavity 4241 is sufficient.

With the third sub-cavity 4243 provided and the first sub-cavity 4241 and the second sub-cavity 4242 communicated, the second heat exchange medium is enabled to enter from the first sub-cavity 4241 into the second sub-cavity 4242, to achieve circular flow of the second heat exchange medium.

Referring to Fig. 8 and Fig. 9, in some embodiments, a plurality of partitions 422 are provided within each of the first sub-cavity 4241 and the second sub-cavity 4242, and the partitions 422 extend along the first direction. The plurality of partitions 422 located within the first sub-cavity 4241 are arranged along a third direction, and a liquid incoming flow channel is formed between two adjacent partitions 422 located within the first sub-cavity 4241. The plurality of partitions 422 located within the second sub-cavity 4242 are arranged along the third direction, and a liquid outgoing flow channel is formed between two adjacent partitions 422 located within the second sub-cavity 4242. The first direction, the second direction, and the third direction are perpendicular to one another.

The third direction may be a Y direction as shown in Fig. 8 and Fig. 9.

In some embodiments, the partition 422 is a projection projecting from a side of the second support body 42 facing the battery cell group 20. The top of the partition 422 is attached to a side of the first support body 41 facing the second support body 42 to prevent the second heat exchange medium from flowing between the partition 422 and the first support body 41.

In further embodiments, the partition 422 is a projection projecting from a side of the first support body 41 facing away from the battery cell group 20. A side of the partition 422 facing away from the battery cell group 20 is attached to the side of the second support body 42 facing the battery cell group 20 to prevent the second heat exchange medium from passing between the partition 422 and the first support body 41.

By providing the partition 422, the first sub-cavity 4241 is further partitioned into a plurality of liquid incoming flow channels, and the second sub-cavity 4242 is further partitioned into a plurality of liquid outgoing flow channels, such that a flowing range of the second heat exchange medium is narrowed from the first sub-cavity 4241 to the plurality of liquid incoming flow channels, and from the second sub-cavity 4242 to the plurality of liquid outgoing flow channels, which is beneficial to increasing the flowing speed of the second heat exchange medium within the first sub-cavity 4241 and the second sub-cavity 4242, improving the heat exchange effect. Additionally, the partition 422 is also capable of withstanding force from the first support member 30, thus optimizing force bearing, and improving supporting capacity of the second support member 40.

In some embodiments, the partition 422 includes a plurality of partition segments, the plurality of partition segments are arranged in spaced manner along the first direction, and a communication flow channel is formed between two adjacent partition segments. The communication flow channel enables two adjacent liquid incoming flow channels or two adjacent liquid outgoing flow channels to be communicated. The presence of the communication flow channel is beneficial to increasing a range of the second heat exchange medium flowing within the first sub-cavity 4241 and the second sub-cavity 4242, and beneficial to increasing a range of the second heat exchange medium covering the battery cell group 20, to improve the heat exchange effect.

Referring to Fig. 6, Fig. 8, and Fig. 9, in an embodiment where the partition 422 is a projection projecting from the side of the second support body 42 facing the battery cell group 20, the position, corresponding to the partition 422, on the side of the second support body 42 facing away from the battery cell group 20 forms a groove 423. Optionally, the groove 423 and the partition 422 are shaped at one time by stamping the second support body 42.

Referring to Fig. 8 and Fig. 9, in some embodiments, the second support member 40 includes two heat exchange zones 424, and the two heat exchange zones 424 are arranged along the third direction. The first direction, the second direction, and the third direction are perpendicular to one another. Each heat exchange zone 424 is provided with at least one first sub-cavity 4241 and at least one second sub-cavity 4242. The first sub-cavity 4241 and the second sub-cavity 4242 located in the same heat exchange zone 424 are communicated.

One heat exchange zone 424 may exchange heat for at least one battery cell group 20. The second support member 40 includes two heat exchange zones 424 to exchange heat for the plurality of battery cell groups 20. Each heat exchange zone 424 is provided with at least one first sub-cavity 4241 and at least one second sub-cavity 4242 therein. The first sub-cavity 4241 and the second sub-cavity 4242 located in the same heat exchange zone 424 are communicated to create an independent heat exchange circulation.

With the two heat exchange zones 424 provided, the two heat exchange zones 424 share an inlet 4246 and an outlet 4247. After entering the first cavity 421 from the inlet 4246, the second heat exchange medium enters the first sub-cavities 4241 of the two heat exchange zones 424, respectively, are gathered, respectively, to the second sub-cavities 4242 of the two heat exchange zones 424, and are then discharged from the outlet 4247 to achieve circulation. In this way, space can be fully utilized to allow for heat exchange of the battery cell group 20 and help reduce flow resistance.

In some embodiments, each heat exchange zone 424 is provided with a plurality of first sub-cavities 4241, and the plurality of first sub-cavities 4241 are arranged along the third direction.

With the plurality of first sub-cavities 4241 provided and the plurality of first sub-cavities 4241 being arranged along the third direction, the plurality of first sub-cavities 4241 are enabled to cover most area of each battery cell 21. Since the second heat exchange medium enters the first sub-cavities 4241 from the inlet 4246, heat exchange effect of the first sub-cavities 4241 is good. The first sub-cavities 4241 cover most area of each battery cell 21 to achieve a good heat exchange effect. Additionally, the plurality of first sub-cavities 4241 correspond to one second sub-cavity 4242. After the second heat exchange medium enters the second sub-cavity 4242 from the plurality of first sub-cavities 4241, the flowing speed becomes higher, such that even if the heat exchange effect of the second heat exchange medium in the second sub-cavity 4242 is slightly poor, but as the flowing speed is higher, a good heat exchange effect can also be achieved. Therefore, the heat exchange effect for each battery cell 21 is good, and there will be no situation where a difference of temperature between the battery cell 21 close to the outlet 4247 position and the battery cell 21 close to the inlet 4246 position is too large.

In some embodiments, the first cavity 421 further includes a dividing chamber 4244 and a combining chamber 4245, wherein the dividing chamber 4244 is communicated with the inlet 4246, and the dividing chamber 4244 is communicated separately with a plurality of first sub-cavities 4241 within the two heat exchange zones 424. The combining chamber 4245 is communicated with the outlet 4247, and the combining chamber 4245 is communicated separately with the second sub-cavities 4242 in the two heat exchange zones 424. The second heat exchange medium enters the dividing chamber 4244 from the inlet 4246. After being subject to dividing through the dividing chamber 4244, the second heat exchange medium enters the plurality of first sub-cavities 4241 within the two heat exchange zones 424, and then flows into the second sub-cavities 4242 via the third sub-cavities 4243, and the second heat exchange medium in the second sub-cavities 4242 of the two heat exchange zones 424 is combined via the combining chamber 4245 and is discharged from the outlet 4247.

In some embodiments, the area of the first surface 211 is larger than that of the second surface 212.

With the area of the first surface 211 being greater than that of the second surface 212, space defined by the two first surfaces 211 and the four second surfaces 212 is large, facilitating accommodating of an electrode assembly 216 (as shown in Fig. 10).

Referring to Fig. 10, Fig. 10 is an exploded view of a battery cell 21 provided in some embodiments of the present application. In some embodiments, the battery cell 21 includes a housing 214, an end cover 215, and an electrode assembly 216, and the electrode assembly 216 is accommodated within the housing 214. The housing 214 has an opening and a flanging portion 2141 formed at the edge of the opening. The end cover 215 covers the opening. The end cover 215 is connected with the flanging portion 2141 to form a flange portion 213.

The end cover 215 refers to a component that covers the opening of the box body 214 to isolate an internal environment of the battery cell 21 from an external environment. Without limitation, the shape of the end cover 215 may be adapted to that of the housing 214 to fit the housing 214. Optionally, the end cover 215 may be made of a material with certain hardness and strength (such as aluminum alloy), and thus the end cover 215 is less prone to deformation when squeezed or collided, such that the battery cell 21 can have a higher structural strength, and safety performance may also be improved. The end cover 215 may be provided with functional components thereon, such as electrode terminals. The electrode terminals may be used for electrical connection to the electrode assembly 216 for outputting or inputting electrical energy of the battery cell 21. The end cover 215 may also be made of various materials, such as copper, iron, aluminum, stainless steel, aluminum alloy, plastic etc., which is not particularly limited in the embodiments of the present application. In some embodiments, an insulating member may be provided inside the end cover 215, and the insulating member may be used to isolate electrical connection components within the housing 214 from the end cover 215 to reduce the risk of short circuit. Exemplarily, the insulating member may be plastic, rubber, etc.

The housing 214 is an assembly that is used to fit with the end cover 215 to form the internal environment of the battery cell 21, wherein the internal environment formed may be used for accommodating the electrode assembly 216, an electrolyte, and other components. The housing 214 and the end cover 215 may be separate components, and the housing 214 may be provided with an opening thereon, where the end cover 215 is allowed to cover the opening to form the internal environment of the battery cell 21. Without limitation, the end cover 215 and the housing 214 may also be integrated. Specifically, the end cover 215 and the housing 214 may form a common connection face before other components are put into the housing. When it is necessary to encapsulate the inside of the housing 214, the housing 214 is then covered with the end cover 215. Specifically, the shape of the housing 214 may be determined according to the specific shape and dimensional size of the electrode assembly 216. The housing 214 may be made of various materials, such as copper, iron, aluminum, stainless steel, aluminum alloy, plastic etc., which is not particularly limited in the embodiments of the present application.

The flanging portion 2141 is a flanging structure formed at the edge of the opening of the housing 214. The flanging portion 2141 is arranged opposite to the end cover 215, and the end cover 215 is connected to the flanging portion 2141 to form the flange portion 213.

The electrode assembly 216 is a component in the battery cell 21 that undergoes an electrochemical reaction. The housing 214 may contain one or more electrode assemblies 216 therein. The electrode assembly 216 is mainly formed by winding or stacking a positive electrode plate and a negative electrode plate, and a separator is typically provided between the positive electrode plate and the negative electrode plate. Portions of the positive electrode plate and the negative electrode plate that have active material constitute a body portion of the electrode assembly 216, and portions of the positive electrode plate and the negative electrode plate that do not have active material each constitute tabs. The positive electrode tab and the negative electrode tab may be located together at one end of the body portion or located respectively at two ends of the body portion. During charging and discharging processes of the battery 100, a positive active substance and a negative active substance react with an electrolyte, and the tabs are connected to the electrode terminals to form a current loop.

The flange portion 213 is formed by connecting the end cover 215 and the flanging portion 2141 of the housing 214. If the flange portion 213 is damaged, connection between the end cover 215 and the housing 214 fails, thus resulting in damage to the battery cell 21. Therefore, with the first recess 31 to avoid the flange portion 213, the flange portion 213 does not need to bear force, reducing the risk of damage to the flange portion 213 due to force bearing, thus also reducing the risk of damage to the battery cell 21, and extending the lifespan of the battery 100.

An embodiment of the present application further provides an electrical device, and the electrical device includes a battery 100 described above. The battery 100 is used to provide electrical energy for the electrical device.

According to some embodiments of the present application, refer to Fig. 2 to Fig. 9.

An embodiment of the present application provides a battery 100. The battery 100 includes a battery cell group 20, a first support member 30, and a second support member 40. The battery cell group 20 includes a plurality of battery cells 21 arranged along a first direction. Each battery cell 21 includes a housing 214, an end cover 215, and an electrode assembly 216, and the electrode assembly 216 is accommodated within the housing 214. The housing 214 has an opening and a flanging portion 2141 formed at the edge of the opening. The end cover 215 covers the opening. The end cover 215 is connected with the flanging portion 2141 to form a flange portion 213. The first support member 30 and the second support member 40 are used for supporting the battery cell group 20. The battery cell group 20, the first support member 30, and the second support member 40 are sequentially arranged along a second direction, and the second direction is perpendicular to the first direction. A first recess 31 for avoiding the flange portion 213 is provided on a side of the first support member 30 facing the battery cell group 20, and a first cavity 421 is formed inside the second support member 40. The flange portion 213 is formed by connecting the end cover 215 and the flanging portion 2141 of the housing 214. If the flange portion 213 is damaged, connection between the end cover 215 and the housing 214 fails, thus resulting in damage to the battery cell 21. The first support member 30 of the battery 100 is provided with the first recess 31 that avoids the flange portion 213. In this way, the first support member 30 will avoid the flange portion 213 when supporting the battery cell 21, so that the flange portion 213 does not need to bear force, reducing the risk of damage to the flange portion 213 due to force bearing. The first cavity 421 is formed inside the second support member 40. When the battery 100 experiences a collision, the first cavity 421 can provide buffering and absorb energy, reducing the effect of an external impact on the battery cell 21, improving anti-collision capability of the battery 100, and reducing the possibility of damage to the flange portion 213 due to the external impact so that the battery 100 has a longer lifespan.

A side of the first support member 30 facing the battery cell group 20 is provided with a plurality of protrusions 32. Each protrusion 32 correspondingly supports one battery cell 21, and a first recess 31 is formed between two adjacent protrusions 32. The first support member 30 is of a corrugated plate-shaped structure. One first support member 30 is provided with a plurality of protrusions 32 thereon to correspondingly support a plurality of battery cells 21. The plurality of protrusions 32 connected together have good strength and can play a good role of supporting the battery cell group 20. The first recess 31 is formed between adjacent two of the protrusions 32 to avoid the flange portion 213 of the battery cell 21 supported by the protrusions 32, so that the flange portion 213 of the battery cell 21 supported by the protrusions 32 does not need to bear force, thereby reducing the risk of damage to the flange portion 213 due to force bearing such that the battery 100 has a longer lifespan.

A second recess 34 is formed at a position, corresponding to the protrusion 32, on a side of the first support member 30 facing away from the battery cell group 20. The second support member 40 covers the second recess 34 to form a second cavity 33. By forming the second recess 34 on the side of the first support member 30 facing away from the battery cell group 20 and enabling the position of the second recess 34 to correspond to the protrusion 32, on the one hand, it is possible that use of materials of the first support member 30 is reduced and production cost is reduced, while strength of the position where the protrusion 32 is located is guaranteed; on the other hand, the second cavity 33 formed by the second support member 40 covering the second recess 34 can provide buffering and absorb energy, reducing the effect of an external impact on the battery cell 21, improving the anti-collision capability of the battery 100, and reducing the possibility of damage to the flange portion 213 due to the external impact such that the battery 100 has a longer lifespan.

A first heat exchange medium is disposed in the second cavity 33 to adjust the temperature of the battery cell 21. With the first heat exchange medium provided in the second cavity 33 so as to exchange heat with the battery cell 21, and to absorb heat of the battery cell 21 or supply heat to the battery cell 21 to adjust the temperature of the battery cell 21, the battery cell 21 is allowed to work at the suitable temperature, improving performance of the battery 100.

The second support member 40 includes a first support body 41 and a second support body 42. The first support member 30, the first support body 41, and the second support body 42 are disposed sequentially along the second direction. A third recess is formed on a side of the second support body 42 facing the first support body 41, and the first support body 41 covers the third recess to form a first cavity 421. With the first support body 41 and the second support body 42 jointly defining the first cavity 421, and the first cavity 421 being independent of the first support member 30 (the first cavity 421 is unrelated to the arrangement form of the first support member 30), the position and form of the first cavity 421 may be freely designed as needed to achieve a good buffering and energy-absorbing result.

The first support member 30, the first support body 41, and the second support body 42 are all plate-shaped structures. The first support member 30, the first support body 41, and the second support body 42 are all plate-shaped structures, which occupy a small amount of space of the battery 100, and construction and manufacturing are facilitated.

The first cavity 421 is configured to accommodate a second heat exchange medium to adjust the temperature of the battery cell 21. With the second heat exchange medium provided in the first cavity 421 so as to exchange heat with the battery cell 21, and to absorb heat of the battery cell 21 or supply heat to the battery cell 21 to adjust the temperature of the battery cell 21, the battery cell 21 is allowed to work at the suitable temperature, improving performance of the battery 100.

The first cavity 421 includes at least one first sub-cavity 4241 and at least one second sub-cavity 4242, and the first sub-cavity 4241 extends along the first direction. Along the second direction, the first sub-cavity 4241 covers at least a portion of each battery cell 21 in the battery cell group 20. The second sub-cavity 4242 extends along the first direction, and along the second direction, the second sub-cavity 4242 covers at least a portion of each battery cell 21 in the battery cell group 20. The first sub-cavity 4241 and the second sub-cavity 4242 extend along the arrangement direction of a plurality of battery cells 21, so that the first sub-cavity 4241 and the second sub-cavity 4242 can cover each battery cell 21 in the battery cell group 20 and exchange heat with each battery cell 21 to adjust the temperature of each battery cell 21 so that it works at a suitable temperature, improving performance of the battery 100.

The foregoing descriptions are merely exemplary embodiments of present application, but are not intended to limit the present application. Persons skilled in the art understand that the present application may have various modifications and variations. Any modification, equivalent replacement, and improvement made without departing from the spirit and principle of the present application shall fall within the protective scope of the present application.

## Claims

1. A battery, comprising:
a battery cell group comprising a plurality of battery cells arranged along a first direction, each of the battery cells comprising two first surfaces provided oppositely along the first direction and four second surfaces provided around the first surfaces, each of the battery cells having a flange portion protruding from the second surface;
a first support member and a second support member for supporting the battery cell group, the battery cell group, the first support member, and the second support member being sequentially disposed along a second direction, the second direction being perpendicular to the first direction; and
a first recess for avoiding the flange portion being provided on a side of the first support member facing the battery cell group, a first cavity being formed inside the second support member.

2. The battery according to claim 1, wherein the side of the first support member facing the battery cell group is provided with a plurality of protrusions, each of the protrusions correspondingly supports one of the battery cells, and the first recess is formed between adjacent two of the protrusions.

3. The battery according to claim 2, wherein a heat conducting layer is provided between the protrusion and the battery cell.

4. The battery according to claim 3, wherein along the second direction, the length of the flange portion protruding from the second surface is A, the depth of the first recess is B, the thickness of the heat conducting layer is C, and they satisfy: B + C - A ≥ 1.5 mm.

5. The battery according to claim 4, wherein 0.5 mm ≤ C ≤ 2.5 mm.

6. The battery according to any one of claims 2-5, wherein a second recess is formed at a position, corresponding to the protrusion, on a side of the first support member facing away from the battery cell group, and the second support member covers the second recess to form a second cavity.

7. The battery according to claim 6, wherein a first heat exchange medium is disposed in the second cavity to adjust the temperature of the battery cell.

8. The battery according to any one of claims 2-7, wherein along the first direction, the minimum distance between the flange portion and the protrusion is L1, which satisfies: L1 ≥ 0.5 mm.

9. The battery according to any one of claims 1-8, wherein the thickness of the first support member at the position of the first recess is L2, which satisfies: 0.6 mm ≤ L2 ≤ 1.8 mm.

10. The battery according to any one of claims 1-9, wherein the second support member comprises a first support body and a second support body, the first support member, the first support body, and the second support body are disposed sequentially along the second direction, and the first support body and the second support body jointly define the first cavity.

11. The battery according to claim 10, wherein a third recess is formed on a side of the second support body facing the first support body, and the first support body covers the third recess to form the first cavity.

12. The battery according to claim 11, wherein the depth of the third recess is H, which satisfies: 2.5 mm ≤ H ≤ 4.5 mm.

13. The battery according to claim 11 or 12, wherein the thickness of the second support body at the position of the third recess is L3, which satisfies: 0.4 mm ≤ L3 ≤ 1.6 mm.

14. The battery according to any one of claims 10-13, wherein the thickness of the first support body is L4, which satisfies: 0.2 mm ≤ L4 ≤ 1.4 mm.

15. The battery according to any one of claims 10-14, wherein the first support member, the first support body, and the second support body are all plate-shaped structures.

16. The battery according to any one of claims 1-15, wherein the first cavity is configured to accommodate a second heat exchange medium to adjust the temperature of the battery cell.

17. The battery according to claim 16, wherein the first cavity comprises at least one first sub-cavity, the first sub-cavity extending along the first direction; and
along the second direction, the first sub-cavity covers at least a portion of each battery cell in the battery cell group.

18. The battery according to claim 17, wherein the second support member is provided with an inlet and an outlet, the first cavity further comprises at least one second sub-cavity, the second sub-cavity extends along the first direction, the inlet, the first sub-cavity, the second sub-cavity, and the outlet are communicated in sequence, and a second heat exchange medium in the first sub-cavity flows in an opposite direction to a second heat exchange medium in the second sub-cavity; and
along the second direction, the second sub-cavity covers at least a portion of each battery cell in the battery cell group.

19. The battery according to claim 18, wherein the first cavity further comprises a third sub-cavity, and along the first direction, the third sub-cavity is located at one end of the first sub-cavity and the second sub-cavity to communicate the first sub-cavity and the second sub-cavity.

20. The battery according to claim 18 or 19, wherein the second support member comprises two heat exchange zones, the two heat exchange zones are arranged along a third direction, the first direction, the second direction, and the third direction are perpendicular to one another, each of the heat exchange zones is provided with at least one of the first sub-cavities and at least one of the second sub-cavities, and the first sub-cavity and the second sub-cavity located in the same heat exchange zone are communicated.

21. The battery according to claim 20, wherein each of the heat exchange zones is provided with a plurality of the first sub-cavities, and the plurality of the first sub-cavities are arranged along the third direction.

22. The battery according to any one of claims 1-21, wherein the area of the first surface is greater than that of the second surface.

23. The battery according to any one of claims 1-22, wherein the battery cell comprises a housing, an end cover, and an electrode assembly, the electrode assembly is accommodated in the housing, the housing has an opening and a flanging portion formed at the edge of the opening, the end cover covers the opening, and the end cover is connected with the flanging portion to form the flange portion.

24. An electrical device, comprising the battery according to any one of claims 1-23.
